# EUROPÄISCHE PATENTSCHRIFT

(11) **EP 0 760 445 B1**
(45) Veröffentlichungstag und Bekanntmachung des Hinweises auf die Patenterteilung: **16.09.1998**
(21) Anmeldenummer: 96810386.1
(22) Anmeldetag: 12.06.1996
(51) Int. Cl.: F16L 3/10, E04D 13/08

(54) **Rohrschelle**
Pipe clamp
Collier de serrage

(30) Priorität: 25.08.1995 DE 19531487; 23.12.1995 DE 19548737
(43) Veröffentlichungstag der Anmeldung: 05.03.1997
(73) Patentinhaber: HILTI Aktiengesellschaft, 9494 Schaan (LI)
(72) Erfinder: Schuwerk, Heribert, 9495 Rebstein (CH); Korten, Gerd, 80634 München (DE); Föhn, Sigi, 9473 Gams (CH); Becker, Werner-Christian, 9488 Schellenberg (LI); Sedlmeier, Andreas, 86932 Ummendorf (DE); Hermann, Fritz, 86899 Landsberg (DE)
(74) Vertreter: Wildi, Roland

(56) Entgegenhaltungen:
- EP-A- 0 123 363
- DE-A- 4 409 765
- FR-A- 2 533 659

## Beschreibung

Die Erfindung betrifft eine Rohrschelle gemäss dem Oberbegriff des Patentanspruchs 1.

Rohrschellen der gattungsgemässen Art finden bei der Installation von Rohren Verwendung, wobei die Rohre entlang von Wänden geführt oder von Decken abgehängt werden. Die Rohrschellen werden dabei vorzugsweise über Gewindeansätze und darin eingreifende Halteelemente am Untergrund befestigt. In der EP-A-0,123,363 ist eine Rohrschelle beschrieben, die insbesondere für die Befestigung von der Ableitung von Regenwasser dienenden Rohren ausgebildet ist. Die Rohrschelle umfasst zwei etwa halbkreisförmige Bügel, welche mit gegenseitig entsprechenden Flanschen ausgestattet sind. Die Bügel sind an den Flanschen miteinander verbindbar. Dazu weisen die Flansche eines der Bügel Schraublöcher zur Aufnahme von Befestigungsbolzen auf, während die Flansche des zweiten Bügels mit korrespondierenden Löchern versehen sind, die in Form von Einschnitten in den Flanschseitenrändem münden. In der Nähe des offenen Endes jedes Einschnittes sind Erhöhungen vorgesehen, welche einen Anschlag für den Kopf des Befestigungsbolzens bilden. Auf diese Weise sollen die Bügel bei der Montage zusammengefügt werden können und auch ohne Festziehen der Befestigungsbolzen bereits provisorisch gesichert sein, indem die Erhöhungen an den Einschnitten den Bolzenkopf hintergreifen und verhindern, dass die Bügel wieder auseinandergleiten.

Bei dieser bekannten Rohrschelle müssen die Befestigungsbolzen in einem relativ exakten Ausmass in die Schraublöcher des einen Bügels eingedreht werden, um einerseits ein Einhängen des zweiten Bügels zu ermöglichen und andererseits ein Auseinanderfallen der zusammengehängten Bügel zu vermeiden. Die Erhöhungen müssen exakt auf den Durchmesser des Kopfes des Befestigungsbolzens abgestimmt sein, um ein sicheres Hintergreifen zu gewährleisten. Die Länge der Erhöhungen muss der Höhe des Bolzenkopfes entsprechen, um zu verhindern, dass die Erhöhungen den festgeschraubten Befestigungsbolzen zu weit überragen. Vorbeigehende Personen könnten daran hängenblieben und sich schlimmstenfalls an den Vorsprüngen verletzen.

Die Herstellung der Erhöhungen erfordert zusätzliche Fertigungsschritte, was zusätzliche Fertigungskosten verursacht und bei einem Massenartikel unerwünscht ist.

Aufgabe der vorliegenden Erfindung ist es, diesen Nachteilen der Rohrschellen des Standes der Technik abzuhelfen. Die Bügel sollen einfach zusammenfügbar sein und ohne spezielle Vorbereitung provisorisch sicherbar sein. Das Fixieren der Bügel aneinander soll ohne die Unterstützung der Rohrschelle während der Befestigung der Befestigungsbolzen erfolgen. Dabei soll die Herstellung der Rohrschelle einfach und kostengünstig sein.

Die Lösung dieser Aufgaben erfolgt durch eine Rohrschelle, welche die im kennzeichnenden Abschnitt des Patentanspruchs 1 angeführten Merkmale aufweist. Die erfindungsgemässe Rohrschelle weist zwei etwa halbkreisförmig ausgebildete Bügel auf, die mit an ihren Längsenden ausgebildeten Flanschen zusammenfügbar sind und um eine senkrecht zu zwei zusammengefügten Flanschen verlaufende Achse gegeneinander verschwenkbar und im wesentlichen senkrecht zur Achse gegeneinander längsverschiebbar sind. An dem der Achse gegenüberliegenden Flanschpaar sind eine Durchtrittsöffnung und ein korrespondierendes Schraubloch für einen Befestigungsbolzen vorgesehen. Die Durchtrittsöffnung ist als in der Seitenwandung eines Flansches mündender Einschnitt ausgebildet, dessen Weite derart bemessen ist, dass der Befestigungsbolzen ungehindert seitlich einführbar ist. Der Einschnitt besitzt eine schlüssellochförmige Gestalt mit einer asymmetrisch angeordneten Hinterschneidung, welche in Gebrauchsstellung als Anschlag für den Schaft des Befestigungsbolzens ausgebildet ist.

Durch die erfindungsgemässe Ausbildung der Rohrschelle sind die Bügel provisorisch aneinander fixierbar, ohne dass zuvor auf eine exakte Einstellung des Befestigungsbolzens geachtet werden muss. Der nicht mit dem Untergrund verbundene Bügel ist seitlich einschwenkbar. Dabei erlauben es die Längsverschieblichkeit der Bügel und die Weite des Einschnittes, dass der Schaft des Befestigungsbolzens ungehindert von der Mündung in der Seitenwand her in den erweiterten Bereich der asymmetrischen Hinterschneidung eingeführt werden kann. In der Gebrauchsstellung wird der Befestigungsbolzen unterhalb seines Kopfes teilweise von der Hinterschneidung umgriffen und dient diesem als Anschlag gegen ein unbeabsichtigtes Herausgleiten des Befestigungsbolzens aus dem Einschnitt. Dadurch sind die provisorisch zusammengefügten Bügel gegen ein Auseinanderschwenken, beispielsweise bei einem Positionieren eines darin gehaltenen Rohres zum Verbinden mit einer Muffe oder zum Verlöten mit einem anderen Rohr, gesichert. Erst wenn die Manipulationen am provisorisch gehaltenen Rohr beendet sind, werden die beiden Bügel engültig miteinander fixiert, beispielsweise durch Anziehen des in dem Schraubloch gehaltenen Befestigungsbolzens und gegebenenfalls weiterer Befestigungselemente. Die provisorisch zusammengefügten Bügelhälften müssen für das vollständige Schliessen der Rohrschelle durch Anziehen des Befestigungsbolzens und gegebenenfalls noch weiterer Befestigungselemente nicht mehr gehalten werden. Die erfindungsgemässe Rohrschelle ist komfortabel, schnell und sicher in der Anwendung. Ihre Herstellung erfordert keinen besonderen Aufwand und ist einfach zu bewerkstelligen.

In einer vorteilhaften Ausführungsvariante der Erfindung weisen die Flansche mit der Schwenkachse eine Durchgangsbohrung und ein korrespondierendes Schraubloch für eine Befestigungsschraube auf. Dabei ist die Durchgangsbohrung als Langloch ausgebildet, dessen Breite grösser ist als der Durchmesser des Schaftes der Befestigungsschraube und kleiner als deren Kopfdurchmesser. Das Langloch erlaubt ein Längsverschieben der beiden Bügel, um den Befestigungsbolzen in den Einschnitt einzuführen, dessen Mündung gegenüber dem Schwenkradius des Bügels längsverschoben ist. Die Schwenkachse wird von der Befestigungsschraube gebildet, welche zugleich als zusätzliches Befestigungselement für das endgültige Fixieren der Bügelhälften aneinander dient.

Mit Vorzug erstreckt sich die asymmetrische Hinterschneidung in Richtung des freien Flanschendes. Auf diese Weise ist insbesondere bei einer Wandmontage der Rohrschelle eine Sicherung der provisorisch zusammengefügten Bügel gewährleistet. In Gebrauchsstellung wird die Rohrschelle mit nach oben weisendem Einschnitt und tiefer angeordneter Schwenkachse montiert. Dadurch hängt bei geöffneter Rohrschelle der ausgeschwenkte bewegliche Bügel nach unten und erlaubt ein einfaches Einlegen des Rohres. Zum Schliessen wird der bewegliche Bügel nach oben geschwenkt. Dabei wird der mit dem Einschitt und der asymmetrischen Hinterschneidung versehene Bügel gegenüber dem an der Wand montierten Bügel längsverschoben bzw. angehoben und über den von dem Schraubloch abragenden Befestigungsbolzen geschoben. Durch die Schwerkraft gleitet der Bügel wieder nach unten und die Hinterschneidung umgreift den Befestigungsbolzen unterhalb seines Kopfes. Durch die asymmetrisch Anordnung der Hinterschneidung bildet diese einen Anschlag für den Befestigungsbolzen und verhindert, dass dieser bei einer Manipulation des Rohres aus dem Einschnitt gleitet.

Aus Gründen der einfacheren Herstellbarkeit und um die asymmetrische Anordnung der Hinterschneidung noch zu verstärken, mündet die der Hinterschneidung gegenüberliegende Begrenzungswandung des Einschnittes im wesentlichen senkrecht in die Seitenwandung des Flansches. Auf diese Weise kommt der mit seinem Umfang an der Begrenzungswandung angrenzende Befestigungsbolzen mit einem Grossteil seines Umfangs in den Bereich der asymmetrisch angeordneten Hinterschneidung zu liegen. Auf diese Weise wird ein grösserer Umschlingungswinkel der Hinterschneidung und des Befestigungsbolzens erzielt, und die provisorische Fixierung der zusammengefügten Bügel wird verbessert.

Bei einer vorteilhaften Ausführungsvariante der erfindungsgemässen Rohrschelle, die insbesondere für die Deckenmontage geeignet ist, weist der Befestigungsbolzen unterhalb seines Kopfes einen zylindrischen Ringbund auf, dessen Durchmesser grösser ist als der Durchmesser des Schaftes des Befestigungsbolzens und gleich gross bzw. geringfügig kleiner ist als der grösste Durchmesser des Einschnittes im Bereich der Hinterschneidung. In der Gebrauchsstellung der Rohrschelle ist der derart ausgebildete Befestigungsbolzen in der Hinterschneidung gehalten, indem der mit dem Einschnitt versehene Bügel durch das Gewicht des Rohres nach unten bzw. bei Wandmontage nach aussen gedrückt wird. Dabei kommt der grössere Durchmesser des axialen Fortsatzes unterhalb des Kopfes des Befestigungsbolzens in Eingriff mit der Hinterschneidung, welche seinen Schaft teilweise umgreift und sichert. Auf diese Weise ist die Rohrschelle provisorisch gegen ein unbeabsichtigtes Auseinandergleiten bei einer Manipulation des eingelegten Rohres gesichert und die aneinandergefügten Bügel müssen für das vollständige Schliessen der Rohrschelle durch Anziehen der Befestigungsbolzen nicht mehr zusammengehalten werden.

Zum leichteren Einfädeln des Befestigungsbolzens in die Hinterschneidung des Einschnittes ist am Übergang vom Schaft des Befestigungsbolzens zum zylindrischen Ringbund eine Einlauffase angebracht, deren Länge bis etwa die Hälfte der Höhe des zylindrischen Ringbundes beträgt.

Die dem Kopf des Befestigungsbolzens zugewandte Seite des den Einschnitt aufweisenden Bügels weist im Bereich der Hinterschneidung eine fasenartige Vertiefung auf, deren Länge gleich oder kleiner ist als die Höhe des Ringbundes am Befestigungsbolzen. Dies erleichtert das Hineingleiten des Ringbundes in die Hinterschneidung.

In einer alternativen Ausführungsvariante der erfindungsgemässen Rohrschelle ist der Befestigungsbolzen eine Senkkopfschraube. Der Fortsatz ist durch den Übergang vom Durchmesser des Kopfes zum Schaftdurchmesser gebildet. Die dem Kopf der Senkkopfschraube zugewandte Seite des den Einschnitt aufweisenden Bügels besitzt im Bereich der Hinterschneidung eine dem Verlauf des Übergangs am Befestigungsbolzen entsprechende Ansenkung. Die Sicherung der beiden zusammengeschwenkten Bügel erfolgt durch einen Formschluss zwischen dem Senkkopf im Übergangsbereich zum Schaft des Befestigungsbolzens und der angesenkten Hinterschneidung. Der Schaft und die Hinterschneidung sind korrespondierend gefast, wodurch bei Belastung des Bügels durch das Rohr der Befestigungsbolzen geführt in die Hinterschneidung gleitet. Schliesslich umgreift die Hinterschneidung den Übergangsbereich zum Schaft und sichert ihn derart gegen ein Herausgleiten aus dem Einschnitt.

Um auch bei nicht exakt zentrierten Bügeln ein einfaches Einfädeln des Schaftes des Befestigungsbolzens zu ermöglichen, kann der Einschnitt im Mündungsbereich trichterförmig erweitert ausgebildet sein. Vorzugsweise sind dazu die den Einschnitt begrenzenden Seitenwände mit einer Fase versehen.

Im folgenden wird die Erfindung unter Bezugnahme auf die schematischen Darstellungen anhand eines Ausführungsbeispieles näher erläutert. Es zeigen:
Fig. 1 eine explodierte Aufsicht einer erfindungsgemässen Rohrschelle; und
Fig. 2 eine perspektivische Darstellung der zusammengesetzten Rohrschelle.

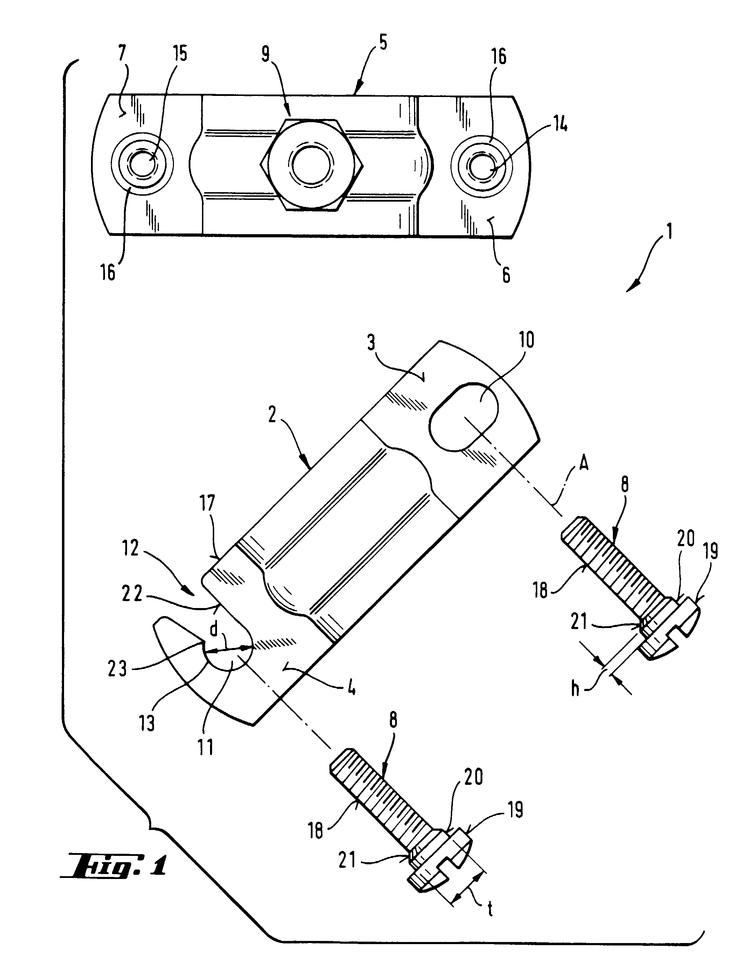

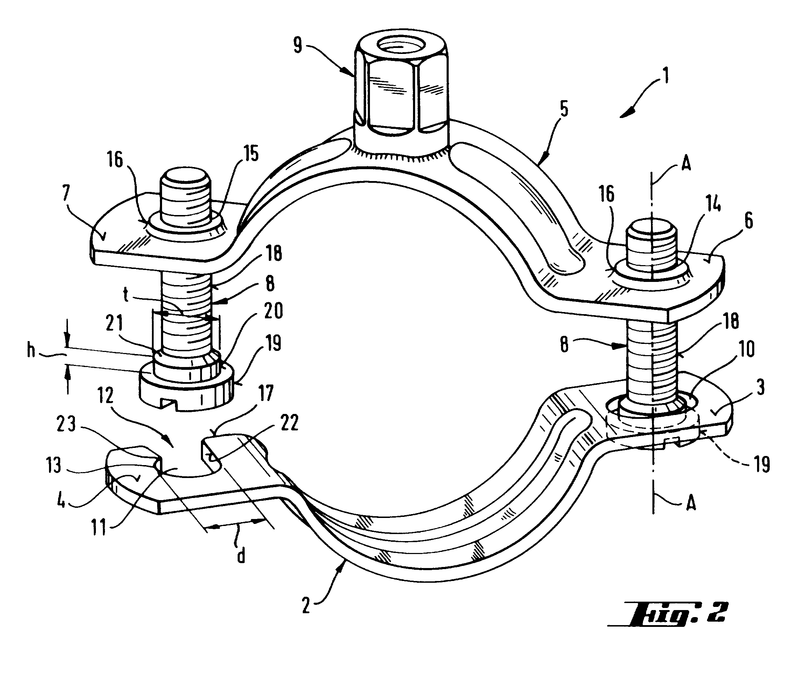

Eine beispielsweise Ausführungsform einer erfindungsgemässen Rohrschelle ist in Fig. 1 in explodierter Darstellung und in Fig. 2 in perspektivischer Darstellung gezeigt und jeweils gesamthaft mit dem Bezugszeichen 1 versehen. Die Rohrschelle 1 umfasst zwei etwa halbkreisförmig gebogene Bügel 2 und 5 mit Flanschen 3, 4 bzw. 6, 7. Die Bügel 2 und 5 sind jeweils an ihren einander gegenüberliegenden Flanschen 3, 6 bzw. 4, 7 aneinander fixierbar. Zum Fixieren sind beispielsweise zwei mit einem Gewinde versehene Befestigungsbolzen 8 vorgesehen, die durch Durchgangstrittsöffnungen 10, 11 in einem der Bügel 2 steckbar und in mit einem Innengewinde versehene Schraublöcher 14, 15 im zweiten Bügel 5 einschraubbar sind. Der mit den Schraublöchem 14, 15 versehene zweite Bügel 5 besitzt einen Gewindeansatz 9, in dem Halteelemente eingreifen können, um die Rohrschelle am Untergrund, beispielsweise einer Wand oder einer Decke, zu befestigen.

Die Durchtrittsöffnung 11 im Flansch 4 des ersten Bügels 2 ist als Einschnitt 12 ausgebildet, der in der Flanschseitenwand 17 mündet. Zum mittleren Bereich des Flansches 4 hin erweitert sich der Einschnitt 12 in einer asymmetrisch angeordneten Hinterschneidung 13. Gemäss der Darstellung weist die Hinterschneidung 13 eine kreisbogenförmige Gestalt auf. Es versteht sich, dass die Hinterschneidung 13 auch eine von der Kreisbogenform abweichende Gestalt aufweisen kann; beispielsweise könnte sie auch elliptisch oder sogar als Vieleck ausgebildet sein. Aus fertigungstechnischen Gründen wird die Kreisbogenform jedoch bevorzugt. Die Weite des Einschnittes 12 ist im Mündungsbereich derart bemessen, dass der Schaft 18 des Befestigungsbolzens 9 ungehindert in den Einschnitt 12 einführbar ist. Die Hinterschneidung 13 ist asymmetrisch angeordnet und insbesondere in Richtung des freien Endes des Flansches 4 versetzt. Auf diese Weise bildet die Hinterschneidung einen Anschlag 23 für den Befestigungsbolzen 8. Die der Hinterschneidung 13 gegenüberliegende Begrenzungswandung 22 des Einschnittes 12 verläuft im wesentlichen geradlinig und mündet etwa senkrecht in der Flanschseitenwand 17.

Um das Einführen des Schaftes 18 des Befestigungsbolzens 9 zu erleichtern, kann der Einschnitt 12 in seinem Mündungsbereich, wie dargestellt, leicht trichterförmig erweitert ausgebildet sein. Insbesondere können dazu beispielsweise die den Einschnitt 12 begrenzenden Seitenwände mit einer Fase (nicht dargestellt) versehen sein.

Die Durchtrittsöffnung 10 an dem zweiten Flansch 3 des den Einschnitt 12 aufweisenden Bügels 2 ist als Langloch ausgebildet, dessen Breite grösser ist als der Durchmesser des Schaftes des Befestigungsbolzens 8 aber kleiner als der Durchmesser seines Kopfes 19. Der zweite Bügel 5 besitzt an seinem dem Langloch gegenüberliegenden Flansch 6 ein Schraubloch 14 mit einem Innengewinde. Indem der die Schraublöcher 14, 15 aufweisende Bügel 5 im Bereich der Schraublöcher 14, 15 Durchzüge 16 aufweist, die sich zu der dem ersten Bügel 2 abgewandten Seite fortsetzen und mit einem Innengewinde versehen sind, wird die Traglänge des Schraubgewindes der Schraublöcher 14, 15 vergrössert.

Gemäss Fig. 1 ragen aus den Schraublöchem 14, 15 die Befestigungsbolzen 8 ab, welche zweckmässigerweise als Befestigungsschrauben ausgebildet sind. Die Befestigungsschrauben sind in ihrer Länge und in ihrem Gewindedurchmesser auf die jeweilige Rohrschelle 1 und deren Einschnitt 12 bzw. Langloch 10 und die Schraublöcher 14, 15 abgestimmt. Insbesondere ist der Durchmesser des Kopfes 19 der Befestigungsschrauben 8 grösser als der grösste Durchmesser d der asymmetrischen Hinterschneidung 13 des Einschnittes 12 bzw. grösser als die Breite des Langlochs 10. Der Durchmesser des Schaftes 18 der Befestigungsschrauben 8 ist derart bemessen, dass er in den Einschnitt 12 einführbar ist.

Während es für die Funktion der erfindungsgemässen Rohrschelle ausreicht, wenn die Befestigungsbolzen 8 die zuvor geschilderten Merkmale aufweisen, sind in dem Ausführungsbeispiel der Rohrschelle gemäss den Fig. 1 und 2 speziell geformte Befestigungsbolzen 8 dargestellt, die, insbesondere bei einer Deckenmontage der erfindungsgemässen Rohrschelle 1, die Sicherung der provisorisch zusammengefügten Bügel 2 und 5 gegen ein unbeabsichtigtes Auseinandergleiten noch verbessern. Demgemäss weist ein Befestigungsbolzen 8 den schon erwähnten Schaft 18 auf, der mit einem Gewinde versehen ist, und einen Kopf 19, der beispielsweise als Linsenkopf ausgebildet ist und mit einem Aufnahmeschlitz für ein Schraubwerkzeug ausgestattet ist. Unterhalb des Kopfes 19 besitzt der Befestigungsbolzen 8 einen axialen Fortsatz, der im dargestellten Ausführungsbeispiel als zylindrischer Ringbund 20 ausgebildet ist und eine Höhe h aufweist. Der Durchmesser t des zylindrischen Ringbundes 20 ist auf den Durchmesser d der Hinterschneidung 13 abgestimmt und ist insbesondere gleich oder geringfügig kleiner als der Durchmesser d der Hinterschneidung 13. Zum leichteren Einfädeln des Befestigungsbolzens 8 in die Hinterschneidung 13 ist im Übergangsbereich vom zylindrischen Ringbund 20 zum Schaft 18 eine Einlauffase 21 vorgesehen, deren Länge bis etwa die Hälfte der Höhe h des zylindrischen Ringbundes beträgt.

Die dem Kopf 19 des Befestigungsbolzens 8 zugewandte Seite des den Einschnitt 12 aufweisenden ersten Bügels 2 kann im Bereich der Hinterschneidung 13 eine fasenartige Vertiefung aufweisen, deren Länge gleich oder kleiner ist als die Höhe h des Ringbundes 20 am Befestigungsbolzen 8. Dies erleichtert das Hineingleiten des Ringbundes 20 in die Hinterschneidung 13.

Während die Erfindung am Beispiel einer Rohrschelle mit Linsenkopfschraube und zylindrischem Ringbund erläutert worden ist, kann in einer nicht dargestellten, altemativen Ausführungsvariante der Befestigungsbolzen 8 eine Senkkopfschraube sein. Der Fortsatz 20 ist dann durch den Übergang vom Durchmesser des Kopfes 19 zum Durchmesser des Schaftes 18 gebildet. Die dem Kopf 19 der Senkkopfschraube zugewandte Seite des den Einschnitt 12 aufweisenden Bügels 2 besitzt in diesem Fall im Bereich der Hinterschneidung 13 eine dem Verlauf des Übergangs am Befestigungsbolzen entsprechende Ansenkung. Die Sicherung der beiden zusammengeschwenkten Bügel 2, 5 erfolgt durch einen Formschluss zwischen dem Senkkopf im Übergangsbereich 20 zum Schaft 18 des Befestigungsbolzens 8 und der angesenkten Hinterschneidung 13. Der Übergangsbereich 20 und die Hinterschneidung 13 sind korrespondierend gefast. Bei Belastung des Bügels 2 durch das gehaltene Rohr gleitet der Übergangsbereich 20 geführt in die Hinterschneidung 13, wo er von der Hinterschneidung 13 umgriffen und gegen ein Herausgleiten aus dem Einschnitt 12 gesichert ist.

In den Fig. 1 und 2 ist die Erfindung am Beispiel einer Rohrschelle 1 mit speziell ausgebildeten Befestigungsbolzen 8 erläutert worden. Es versteht sich jedoch, dass die Ausbildung des Einschnittes 12 mit asymmetrisch angeordneter Hinterschneidung 13 und Anschlag 23 für den Befestigungsbolzen 8 auch mit standardisierten Befestigungsschrauben ausführbar ist, deren Kopfdurchmesser und deren Schaftdurchmesser die zuvor geschilderten Bedingungen erfüllen. In einer nicht näher dargestellten Variante der Erfindung, die für den Fachmann aber ohne weiteres nachvollziehbar ist, sind die Befestigungsbolzen 8 als Senkkopfschrauben beschrieben, die mit dem Anschlag 23 an der asymmetrisch angeordneten Hinterschneidung 13 und gegebenenfalls ensprechend ausgebildeten Ansenkungen der Hinterschneidung 13 zusammenwirken, um die provisorisch zusammengefügten Bügel 2 und 5 am unbeabsichtigten Auseinandergleiten zu hindem.

Durch die erfindungsgemässe Ausbildung der Rohrschelle sind die Bügel provisorisch aneinander fixierbar, ohne dass zuvor besondere Vorbereitungen getroffen werden müssen und beispielsweise auf eine exakte Einstellung der Befestigungsbolzen geachtet werden muss. Der nicht mit dem Untergrund verbundene Bügel ist seitlich einschwenkbar. Dabei erlaubt es die Weite des Einschnittes, dass der Schaft des Befestigungsbolzens ungehindert von der Mündung in der Seitenwand her in den erweiterten Bereich der asymmetrischen Hinterschneidung eingeführt werden kann. Der eingeschwenkte Bügel bewegt sich bei Wandmontage in Gebrauchstellung durch die Schwerkraft in Richtung des Bodens und umgreift dabei den Befestigungsbolzen teilweise. Dieser liegt dadurch am Anschlag der Hinterschneidung an und verhindert ein unbeabsichtigtes Lösen und Auseinandergleiten der Bügel. Bei einer Deckenmontage der erfindungsgemässen Rohrschelle wird der mit dem Einschnitt versehene Bügel nach nach unten gedrückt, wodurch der Schaft des Befestigungsbolzens gleichfalls in Anlage am Anschlag der Hinterschneidung gesichert ist. Bei der speziellen Ausführungsvariante der Befestigungsbolzens mit Ringbund unterhalb des Kopfes des Befestigungsbolzens kommt dieser in Eingriff mit der Hinterschneidung, welche ihn umgreift und sichert. Auf diese Weise ist die Rohrschelle provisorisch gegen ein unbeabsichtigtes Öffnen gesichert. Für das vollständige Schliessen der Rohrschelle durch Anziehen der Befestigungsbolzen müssen die Bügel nicht mehr gehalten werden. Die erfindungsgemässe Rohrschelle ist komfortabel, schnell und sicher in der Anwendung. Ihre Herstellung erfordert keinen besonderen Aufwand und ist einfach zu bewerkstelligen.

Die erfindungsgemässe Rohrschelle kann an ihren das Rohr aufnehmenden Innenseiten der Bügel mit Gummi oder mit schalldämmendem Material beschichtet sein oder mit entsprechenden aufschieb- bzw. aufsteckbaren Dämmelementen oder dergleichen versehen sein, beispielsweise um den Untergrund von Schallschwingungen zu entkoppeln oder um ein axiales Gleiten des Rohres in der Rohrschelle zu erlauben.

## Patentansprüche

1. Rohrschelle umfassend zwei etwa halbkreisförmig ausgebildete Bügel(2, 5), die mit an ihren Längsenden ausgebildeten Flanschen (4, 7; 3, 6) zusammenfügbar und um eine senkrecht zu zwei zusammengefügten Flanschen (3, 6) verlaufende Achse (A) gegeneinander verschwenkbar sind und an dem der Achse (A) gegenüberliegenden Flanschpaar (4, 7) eine Durchtrittsöffnung (11) und ein korrespondierendes Schraubloch (15) für einen Befestigungsbolzen (8) aufweisen, wobei die Bügel (2, 5) im wesentlichen senkrecht zur Achse (A) gegeneinander längsverschiebbar sind und die Durchtrittsöffnung (11) als in der Seitenwandung (17) eines der Flansche (4) mündender Einschnitt (12) ausgebildet ist, der eine Weite besitzt, welche ein ungehindertes seitliches Einführen des vom zugeordneten Schraubloch (15) am anderen Bügel (5) abragenden Befestigungsbolzens (8) erlaubt, dadurch gekennzeichnet, daß der Einschnitt (12) eine schlüssellochförmige Gestalt mit einer asymmetrisch angeordneten Hinterschneidung (13) aufweist, welche in Gebrauchsstellung als Anschlag (23) für den Schaft (18) des Befestigungsbolzens (8) ausgebildet ist.

2. Rohrschelle nach Anspruch 1, dadurch gekennzeichnet, dass die die Schwenkachse (A) aufweisenden Flansche (3, 6) eine Durchgangsbohrung (10) und ein korrespondierendes Schraubloch (14) für eine Befestigungsschraube (8) auweisen, wobei die Durchgangsbohrung (10) als Langloch ausgebildet ist, dessen Breite grösser ist als der Durchmesser des Schaftes (18) der Befestigungsschraube und kleiner als deren Kopfdurchmesser.

3. Rohrschelle nach Anspruch 1 oder 2, dadurch gekennzeichnet, dass die asymmetrische Hinterschneidung (13) sich in Richtung des freien Endes des Flansches (4) erstreckt.

4. Rohrschelle nach einem der vorangehenden Ansprüche, dadurch gekennzeichnet, dass die der Hinterschneidung (13) gegenüberliegende Begrenzungswandung (22) des Einschnittes (12) im wesentlichen senkrecht in die Seitenwandung (17) des Flansches (4) mündet.

5. Rohrschelle nach einem der vorangehenden Ansprüche, dadurch gekennzeichnet, dass der Befestigungsbolzen (8) unterhalb seines Kopfes (19) einen zylindrischen Ringbund (20) aufweist, dessen Durchmesser (t) grösser ist als der Durchmesser des Schaftes (18) des Befestigungsbolzens (8) und gleich gross bzw. geringfügig kleiner ist als der Durchmesser (d) des Einschnittes im Bereich der Hinterschneidung (13), wobei der Ringbund (20) in Gebrauchstellung formschlüssig in der Hinterschneidung (13) gehalten ist.

6. Rohrschelle nach Anspruch 5, dadurch gekennzeichnet, dass am Übergang vom Schaft (18) des Befestigungsbolzen (8) zum zylindrischen Ringbund (20) eine Einlauffase (21) angebracht ist, deren Länge bis etwa die Hälfte der Höhe (h) des zylindrischen Ringbundes (20) beträgt.

7. Rohrschelle nach Anspruch 6, dadurch gekennzeichnet, dass die dem Kopf (19) des Befestigungsbolzens (8) zugewandte Seite des den Einschnitt (12) aufweisenden Bügels (2) im Bereich der Hinterschneidung (13) eine fasenartige Vertiefung aufweist, deren Länge gleich oder kleiner ist als die Höhe (h) des Ringbundes (20) am Befestigungsbolzen (8).

8. Rohrschelle nach einem der Ansprüche 1 - 4, dadurch gekennzeichnet, dass der Befestigungsbolzen (8) eine Senkkopfschraube ist, deren Übergangsbereich vom Durchmesser des Kopfes (19) zum Durchmesser des Schaftes (18) formschlüssig in der Hinterschneidung gehalten ist, wobei die dem Kopf (19) der Senkkopfschraube zugewandte Seite des den Einschnitt (12) aufweisenden Bügels (2) im Bereich der Hinterschneidung (13) eine dem Verlauf des Übergangs (20) am Befestigungsbolzen (8) entsprechende Ansenkung aufweist.

9. Rohrschelle nach einem der vorangehenden Ansprüche, dadurch gekennzeichnet, dass der die Schraublöcher (14, 15) aufweisende Bügel (5) im Bereich der Schraublöcher (14, 15) Durchzüge (16) aufweist, die sich zu der dem anderen Bügel (2) abgewandten Seite fortsetzen und mit einem Innengewinde versehen sind.

10. Rohrschelle nach einem der vorangehenden Ansprüche, dadurch gekennzeichnet, dass der Einschnitt (12) im Mündungsbereich trichterförmig erweitert ausgebildet ist.

## Claims

1. A pipe clamp comprising two stirrup pieces (2, 5) of approximately semicircular construction, which can be joined together by flanges (4, 7; 3, 6) constructed at their longitudinal ends and which can swivel in relation to each other about an axis (A) extending perpendicular to two joined flanges (3. 6). and which comprise, on the opposite pair of flanges (4, 7) to the axis (A), a passageway opening (11) and a corresponding threaded hole (15) for a fastening bolt (8), wherein the stirrup pieces (2, 5) are longitudinally displaceable in relation to each other substantially perpendicular to the axis (A) and the passageway opening (11) is constructed as an indentation (12) leading into the sidewall (17) of one of the flanges (4), which indentation has a width which permits the unimpeded lateral introduction of the fastening bolt (8) which protrudes from the associated threaded hole (15) on the other stirrup piece (5), characterised in that the indentation (12) is of keyhole-shaped form with an asymmetrically disposed undercut (13), which is constructed as a stop (23) for the shank (18) of the fastening bolt (8) in the position of use.

2. A pipe clamp according to claim 1, characterised in that the flanges (3, 6) which comprise the swivelling axis (A) have a passageway opening (10) and a corresponding threaded hole (14) for a fixing screw (8), wherein the passageway opening (10) is constructed as an elongated hole, the width of which is greater than the diameter of the shank (18) of the fixing screw and is smaller than the head diameter thereof.

3. A pipe clamp according to claim 1 or 2, characterised in that the asymmetric undercut (13) extends in the direction of the free end of the flange (4).

4. A pipe clamp according to any one of the preceding claims, characterised in that the opposite boundary wall (22) of the indentation (12) to the undercut (13) leads substantially perpendicularly into the sidewall (17) of the flange (4).

5. A pipe clamp according to any one of the preceding claims, characterised in that the fastening bolt (8) has a cylindrical annular collar (20) underneath its head (19). the diameter (t) of which collar is larger than the diameter of the shank (18) of the fastening bolt (8) and is the same size as or slightly smaller than the diameter (d) of the indentation in the region of the undercut (13), wherein the annular collar (20) is held with a positive fit in the undercut (13) in the position of use.

6. A pipe clamp according to claim 5, characterised in that a lead-in chamfer (21) is provided at the transition from the shank (18) of the fastening bolt (8) to the cylindrical annular collar (20), the length of which lead-in chamfer amounts to up to about half the height (h) of the cylindrical annular collar (20).

7. A pipe clamp according to claim 6, characterised in that the side of the stirrup piece (2) comprising the indentation (12) which faces the head (19) of the fastening bolt (8) has a chamfer-like indentation in the region of the undercut (13). the length of which indentation is less than or equal to the height (h) of the annular collar (20) on the fastening bolt (8).

8. A pipe clamp according to any one of claims 1 - 4, characterised in that the fastening bolt (8) is a countersunk head screw, the transition region of which from the diameter of the head (19) to the diameter of the shank (18) is held with a positive fit in the undercut, wherein the side of the stirrup piece (2) comprising the indentation (2) which faces the head (19) of the countersunk head screw has a countersunk portion in the region of the undercut (13) corresponding to the course of the transition (20) on the fastening bolt (8).

9. A pipe clamp according to any one of the preceding claims, characterised in that the stirrup piece (5) comprising the threaded holes (14, 15) has rim holes (16) in the region of the threaded holes (14,15) which continue to the side facing away from the other stirrup piece (2) and are provided with an internal screw thread.

10. A pipe clamp according to any one of the preceding claims, characterised in that the indentation (12) is of widened, funnel-shaped construction in its mouth region.

## Revendications

1. Collier de serrage comprenant deux étriers de conformation sensiblement semi-circulaire (2, 5) qui peuvent être assemblés par des pattes (4, 7 ; 3, 6) conformées à leurs extrémités longitudinales et peuvent pivoter l'un par rapport à l'autre autour d'un axe (A) perpendiculaire aux deux pattes assemblées (3, 6) et qui comportent, sur la paire de pattes (4, 7) situées à l'opposé de l'axe (A), un orifice débouchant (11) et un trou fileté correspondant (15) pour un boulon de fixation (8), les étriers (2, 5) pouvant se déplacer en translation longitudinale l'un par rapport à l'autre dans une direction sensiblement perpendiculaire à l'axe (A) et l'orifice débouchant (11) étant conformé en encoche (12) qui débouche dans la paroi latérale (17) de l'une des pattes (4) et qui possède une largeur permettant une introduction latérale aisée du boulon de fixation (8) dépassant du trou fileté associé (15) de l'autre étrier (5), caractérisé en ce que l'encoche (12) présente une forme en trou de serrure avec un décrochement asymétrique (13) qui, en position d'utilisation, sert de butée (23) pour la tige (18) du boulon de fixation (8).

2. Collier de serrage selon la revendication 1, caractérisé en ce que les pattes (3, 6) comportant l'axe de pivotement (A) sont pourvues d'un perçage débouchant (10) et d'un trou fileté correspondant (14) pour une vis de fixation (8), le perçage débouchant (10) étant conformé en trou oblong dont la largeur est supérieure au diamètre de la tige (18) de la vis de fixation et inférieure au diamètre de sa tête.

3. Collier de serrage selon la revendication 1 ou 2, caractérisé en ce que le décrochement asymétrique (13) s'étend en direction de l'extrémité libre de la patte (4).

4. Collier de serrage selon une des revendications précédentes, caractérisé en ce que la paroi de limitation (22) qui fait partie de l'encoche (12) et qui fait face au décrochement (13) débouche dans la paroi latérale (17) de la patte (4) dans une direction sensiblement perpendiculaire.

5. Collier de serrage selon une des revendications précédentes, caractérisé en ce que le boulon de fixation (8) comporte, sous sa tête (19), un collet annulaire cylindrique (20) dont le diamètre (t) est supérieur au diamètre de la tige (18) du boulon de fixation (8) et est égal ou légèrement inférieur au diamètre (d) de l'encoche dans la zone du décrochement (13), le collet annulaire (20) étant maintenu, en position d'utilisation, par complémentarité de formes dans le décrochement (13).

6. Collier de serrage selon la revendication 5, caractérisé en ce qu'au niveau de la transition entre la tige (18) du boulon de fixation (8) et le collet annulaire cylindrique (20) est prévu un chanfrein d'insertion (21) dont la longueur est au maximum égale à environ la moitié de la hauteur (h) du collet annulaire cylindrique (20).

7. Collier de serrage selon la revendication 6, caractérisé en ce que la face, tournée vers la tête (19) du boulon de fixation (8), de l'étrier (2) pourvu de l'encoche (12) comporte, dans la zone du décrochement (13), un renfoncement chanfreiné dont la longueur est égale ou inférieure à la hauteur (h) du collet annulaire (20) du boulon de fixation (8).

8. Collier de serrage selon l'une des revendications 1 à 4, caractérisé en ce que le boulon de fixation (8) est une vis à tête noyée dont la zone de transition entre le diamètre de la tête (19) et le diamètre de la tige (18) est maintenue par complémentarité de formes dans le décrochement, la face, tournée vers la tête (19) de la vis à tête noyée, de l'étrier (2) pourvu de l'encoche (12) comportant, dans la zone du décrochement (13), une noyure correspondant au profil de la transition (20) du boulon de fixation (8).

9. Collier de serrage selon une des revendications précédentes, caractérisé en ce que l'étrier (5) pourvu des trous filetés (14, 15) comporte, dans la zone des trous filetés (14, 15), des soyages (16) qui s'étendent en direction de la face opposée à l'autre étrier (2) et sont pourvus d'un filetage intérieur.

10. Collier de serrage selon une des revendications précédentes, caractérisé en ce que l'encoche (12) présente un évasement en forme d'entonnoir dans sa zone débouchante.
